# EUROPÄISCHE PATENTANMELDUNG

(11) **EP 1 431 810 A1**
(43) Veröffentlichungstag der Anmeldung: **23.06.2004**
(21) Anmeldenummer: 02028230.7
(22) Anmeldetag: 16.12.2002
(51) Int. Cl.: G03B 27/80, G06T 7/00, G06T 7/40, G06T 7/60, G06K 9/00, H04N 9/73

(54) **Verfahren zur automatischen Bestimmung von Farbdichte-Korrekturwerten für die Wiedergabe von digitalen Bilddaten**

(71) Anmelder: Agfa-Gevaert AG, 51373 Leverkusen (DE)
(72) Erfinder: Meckes, Günter, 81477 München (DE)

(57) **Zusammenfassung**

Die Erfindung betrifft ein Verfahren zur automatischen Bestimmung von Farbdichte-Korrekturwerten für die Wiedergabe von digitalen Bilddaten. Bei diesem Verfahren werden Vorlagen-Farbdichtewerte der digitalen Bilddaten zumindest bereichsweise ermittelt und mit entsprechenden, bekannten Wiedergabe-Farbdichtewerten verglichen. Zur Verbesserung ist vorgesehen, dass Augäpfel in den Bilddaten identifiziert und daraus Vorlagen-Farbdichtewerte gewählt werden.

## Beschreibung

Die Erfindung betrifft ein Verfahren zur automatischen Bestimmung von Farbdichte-Korrekturwerten für die Wiedergabe von digitalen Bilddaten nach dem Oberbegriff von Anspruch 1.

Bereits bei konventionellen Kopierverfahren, bei denen fotografische Filme auf, Fotopapier belichtet werden, war es notwendig genaue Belichtungszeiten in den Grundfarben Rot, Grün und Blau für jedes zu kopierende Bild zu bestimmen, um ein Bild so realistisch wiederzugeben, dass es unabhängig vom Kopiergerät immer gleich aussieht. Dabei ist ein Aussehen des Bildes angestrebt, welches dem Eindruck, den der Fotograf bei der Herstellung des Bildes hatte, am nächsten kommt. So soll beispielsweise die Verteilung der Grundfarben in der Wiedergabe so sein, dass graue Motive in der Kopie tatsächlich grau erscheinen aber auch relevante Farbtöne wie Hauttöne eine wirklichkeitsnahe Färbung erhalten.

In der DE-OS 19 14 360 wird ein Verfahren offenbart, das darauf abzielt Belichtungszeiten und Intensitäten beim Kopieren von fotografischen Filmen auf lichtempfindliches Material so zu bestimmen, dass graue Motive in der Kopie eine ungefärbte graue Wiedergabe ergeben. Hier wird vorgeschlagen, alle Bilder eines fotografischen Films abzutasten und deren Bildinhalte alle zu berücksichtigen, wenn Belichtungszeiten und Intensitäten für ein Bild bestimmt werden sollen. Dieses Verfahren hat sich besonders dann als sehr vorteilhaft erwiesen, wenn der gesamte Film einen bestimmten Farbstich oder eine durch immer gleiche Belichtungsverhältnisse vorgegebene Fehlfarbe aufweist. Sind dagegen einzelne Bilder anders gefärbt, was z. B. bei Kunstlichtaufnahmen vorkommt, so kann dieses Verfahren nicht verwendet werden. Heutzutage werden immer mehr Bilder mit digitalen Kameras, Scannern oder auf anderem digitalen Wege aufgenommen, wobei nicht immer Bilder einer Serie gemeinsam zur Wiedergabe in Auftrag gegeben werden. So treten in zunehmendem Maße Einzelbilder auf, bei denen dieses vorgeschlagene Verfahren nicht anwendbar ist.

Die DE-PS 42 30 842 beschreibt ein Verfahren zur Bestimmung der Kopierlichtmengen ebenfalls beim Kopieren fotografischer Filme auf Fotopapier. Bei diesem Verfahren wird jedoch der Bildinhalt einzelner Bilder herangezogen. Es werden verschiedene Kriterien überprüft, um Hautflächen, welche sich im Bildinhalt befinden, einwandfrei identifizieren zu können. Den so bestimmten Hautflächen werden die Farben von Hauttönen zugeordnet und diese werden mit den aufgenommenen Farben dieser Bereiche verglichen. Damit ergeben sich Korrekturwerte für die Farben des gesamten Bildes, welche darauf abzielen vor allem diese Partien von Hautflächen realistisch wiederzugeben. Problem bei derartigen, mit Hauttönen arbeitenden Bildverarbeitungsverfahren ist, dass Hautfarben nicht unbedingt immer einheitlich sein müssen. So sind Hauttöne von Schwarzen und Asiaten verschieden von den Hauttönen von Mitteleuropäern.

So war es Aufgabe der Erfindung, ein Verfahren zur automatischen Bestimmung von Farbdichte-Korrekturwerten für die Wiedergabe von digitalen Bilddaten zu entwickeln, welches eine zuverlässigere Bestimmung dieser Werte zulässt als die bekannten Verfahren.

Gelöst wird diese Aufgabe gemäß der Erfindung durch ein Verfahren mit den Merkmalen von Anspruch 1. Weitere vorteilhafte Ausführungsformen sind Bestandteil der Unteransprüche im Zusammenhang mit der Beschreibung und den Zeichnungen.

Erfindungsgemäß werden Augäpfel in den wiederzugebenden Bilddaten identifiziert und zur Bestimmung von Farbdichte-Korrekturwerten herangezogen. Es ist bekannt, dass Augäpfel bei den allermeisten Personen im Wesentlichen weiß, gelegentlich leicht rötlich, sind. Sobald also in den Bilddaten ein Augapfel identifiziert werden konnte, können die Farbdichte-Korrekturwerte für die Wiedergabe des Bildes so gewählt werden, dass dieser Bildbereich von der Farbe, den er in der Vorlage hat, in einen im Wesentlichen weißen Farbton bei der Wiedergabe transferiert wird. Die dafür notwendigen Farbdichte-Korrekturwerte können ebenso wie auf den Augapfelbereich auch auf alle anderen Bereiche des Bildes angewandt werden, da davon auszugehen ist, dass ein Farbstich der die Farbe des Augapfels in der Vorlage verfälscht auch alle anderen Bilddaten farbstichig erscheinen lässt. Sobald ein Augapfel in den Bilddaten identifiziert wurde, werden also dessen tatsächliche Farbdichtewerte, die Vorlagen-Farbdichtewerte ermittelt und mit Wiedergabe-Farbdichtewerten, also den Werten die ein Augapfel in einer idealen Wiedergabe haben sollte bzw. im Allgemeinen in der Realität hat, verglichen. Die sich bei diesem Vergleich ergebenden Farbdichte-Korrekturwerte werden zur Korrektur aller wiederzugebenden Bilddaten dieses Bildes oder aller Bilder eines Aufnahmesatzes verwendet. Grundsätzlich ist dieses Verfahren ähnlich zu realisieren wie die Verwendung von Hauttönen bzw. die hautfarbenen Bildbereichen, es hat jedoch den entscheidenden Vorteil, dass Augäpfel bei nahezu allen Personen dieselbe Farbe bzw. denselben Weißton aufweisen. Die Farben von Augäpfeln zur Bestimmung der Farbdichte-Korrekturwerte zu verwenden ist auch deswegen besonders vorteilhaft, weil, sobald die im Wesentlichen weißen Augäpfel im Bild richtig wiedergegeben werden, davon auszugehen ist, dass auch alle anderen in der Realität weißen Motive in den Bilddaten nach dieser Farbdichte-Korrektur in der Wiedergabe weiß erscheinen. Durch die realistische Wiedergabe von weißen Bildbereichen entsteht beim Betrachter des wiedergebenen Bildes immer ein stimmiger; brillanter Bildeindruck. Damit kann eine erhebliche Verbesserung der Wiedergabefarben im Vergleich zu den gängigen Verfahren der Korrektur anhand von Grauwerten bei den Hauttönen erzielt werden.

Zur Identifikation von Augäpfeln in digitalen Bilddaten können besonders vorteilhaft Gesichtserkennungsverfahren verwendet werden. Dabei werden im Allgemeinen die Bilddaten zuerst auf zusammenhängende, hautfarbene Gebiete untersucht. Dabei ermittelte Bildbereiche werden anschließend geprüft, wobei plausibel gemacht werden soll, ob es sich bei den gefundenen Gebieten tatsächlich um ein Gesicht handeln kann. Hierbei werden die Geometrie des gefundenen Gebiets oder markante Dichtepunkte, welche von eventuellen Augen, Mund und Nase etc. im Gesicht hervorgehoben werden, überprüft. Derartige Verfahren sind Stand der Technik. Ein Beispiel hierfür ist in "Face Detection from Color Negative Film Using Flexible Template," IS & T/SID Eight Color Imaging Conference, S. 140 ff. offenbart. Bei einigen dieser Gesichtserkennungsverfahren liefert die Identifikation eines Gesichts automatisch auch die Position der darin befindlichen Augen mit. Bei anderen Gesichtserkennungsverfahren ist es notwendig, nach Erkennung des Gesichts die darin befindlichen Augen zu suchen. Dabei können zum Beispiel dunkle Stellen innerhalb des Gesichts ermittelt werden, welche in bestimmten, bekannten Proportionsverhältnissen zueinander und zu Gesichtsform und Gesichtsrändern stehen. Zwei dieser dichteren Punkte, welche nach bekannten geometrischen Erwägungen zu suchen sind, ergeben die Augenpositionen.

Weitere zur Bestimmung der Augenpositionen für die Identifikation von Augäpfeln besonders vorteilhaft zu verwendende Verfahren sind aus dem Bereich der sogenannten "rote-Augen-Erkennung" bekannt. Diese gerade bei Bildern, welche mit digitalen Kameras aufgenommen wurden, sehr häufig auftretenden Bildartefakte, die sogenannten roten Augen, werden heutzutage in der Bildbearbeitung häufig detektiert und korrigiert. Sobald rote Augen detektiert und eventuell korrigiert wurden, ist bekannt, an welcher Stelle sich die Augen im Bild befinden. Diese sozusagen nebenbei abfallenden Augenpositionen können zur Identifikation der Augäpfel verwendet werden. Ein Beispiel für ein derartiges Verfahren ist in der EP 09 61 225 A2 offenbart.

Im Rahmen dieses Verfahrens können aber auch alle anderen Verfahren zur Bestimmung von Augenpositionen eingesetzt werden. So können die Augen zum Beispiel auch durch die Überlagerung des Bildinhalts mit sogenannten Augentemplates also Augenmodellen ermittelt werden, wie dies z. B. in der US 6,151,403 beschrieben ist.

Sobald die Position der Augen bekannt ist, kann innerhalb der diesen Augenpositionen entsprechenden Bilddaten nach Bildpunkten gesucht werden, die zu Augäpfeln gehören. Ein besonders vorteilhaftes Verfahren zur Identifikation von Bildpunkten, die Bestandteile von Augäpfeln sind, besteht darin, Gebiete annähernd weißer Farbe im Wiedergabedatensatz im Bereich der Augenpositionen zu suchen. Hierzu kann nach Gebieten hoher Luminanz und geringer Farbsättigung gesucht werden.

Sobald Bildregionen im Bereich der Augenpositionen als mögliche Bestandteile von Augäpfeln identifiziert wurden, sollte vorteilhafter Weise verifiziert werden, dass diese Augapfelkandidaten auch tatsächlich zu Augäpfeln gehören und es sich dabei nicht um andere, weiße Bereiche wie z.B: Lichtreflexe, weiße Brillengestelle etc. handelt. Derartige Lichtreflexe können nämlich auch als weiße Bereiche im Bild auftreten und damit Bereiche geringer Dichte sein. Die Verifikation erfolgt vorteilhafter Weise dadurch, dass die Umgebung von möglichen Augapfelbestandteilen untersucht wird, wobei bekannte, neben den Augäpfeln liegende Bildinhalte gesucht werden. So wird überprüft, ob in der Umgebung der als Augapfel identifizierten Gebiete Farben und Dichten zu finden sind, welche plausibel machen, dass sich an diesen Orten beispielsweise eine Iris oder Wimpern oder Ähnliches befinden.

Bei der Suche nach Gebieten, welche Bilddaten von Augäpfeln darstellen, kann, wie bereits erwähnt, oftmals eine Verwechslung mit Lichtreflexen auftreten, denn derartige Lichtreflexe haben im Bild genauso wie Augäpfel eine weiße Färbung. Sie treten insbesondere im Auge oder als Reflexe an Brillengestellen oder Brillengläsern oder auch in Hautbereichen auf. Bei diesen Lichtreflexen handelt es sich jedoch oftum Bereiche, in denen wenigstens eine Farbe gesättigt ist. Deshalb ist eine Möglichkeit der Unterscheidung zwischen Augapfel und Lichtreflex dadurch gegeben, dass die Farbsättigung in jeder Farbe untersucht wird und nur wenn keine der Farben gesättigt ist auf einen Augapfelbereich geschlossen wird.

Um zwischen Lichtreflexen und Augäpfeln zu unterscheiden, können auch die geometrischen Ausdehnungen der identifizierten Gebiete herangezogen werden. So sind Lichtreflexe im Allgemeinen kleine, schmale und langgezogene Erscheinungen, wo hingegen der Augapfelbereich im Bild doch ein eher größeres, kompakteres Objekt darstellt.

In einer vorteilhafter Ausführungsform des Verfahrens ist vorgesehen, die Bildpunkte, welche als Augapfelpunkte identifiziert wurden, da sie im Bereich von Augenpositionen liegen und entsprechende Dichteprofile aufweisen, zu einem zusammenhängenden Gebiet zusammenzufassen. Dieses Gebiet sollte von seiner Form mit wenigstens einem Teil eines Augapfels in Übereinstimmung gebracht werden können. Dies kann zusätzlich zum Verifizieren des ermittelten Augapfels verwendet werden. Insbesondere stehen innerhalb eines solchen zusammenhängenden Gebietes aber auch eine große Anzahl von Bilddaten zur Verfügung, welche als zu einem Augapfel zugehörig analysiert wurden. Aus dieser Vielzahl von Bilddaten lassen sich aussagekräftigere Farbdichte-Korrekturwerte ableiten als aus wenigen, einzeln ermittelten Punkten.

So ist es beispielsweise vorteilhaft, aus allen Farbdichtewerten eines Augapfelgebietes einen mittleren Augapfel-Farbdichtewert dieses Bildes abzuleiten. Selbstverständlich ist auch möglich, einzelne Bildpunkte für die Bestimmung der Farbdichtewerte des aktuellen Augapfels zu verwenden. Allerdings können hierbei durchaus auch nicht rein weiße, sondern leicht farbige Punkte, welche in jedem Augapfel auftreten können, zum Einsatz kommen und das Ergebnis verfälschen. Zuverlässiger ist es deshalb mit Werten zu arbeiten, die sich aus der Zusammenschau vieler Augapfelpunkte bzw. des gesamten als Augapfel erkannten Gebietes ergeben.

Dieser aktuell aus dem wiederzugebenden Bild ermittelte Vorlagen-Farbdichtewert des Augapfels soll nun in einen realistisch erscheinenden Augapfel-Farbdichtewert umgewandelt werden, welcher auf der Wiedergabe einen optimalen Bildeindruck gewährleistet. Ein derartiger, optimal geeigneter Wiedergabe-Farbdichtewert wird vorteilhafter Weise vorbestimmt und der Bildverarbeitung vorab beispielsweise in einem Speicher zur Verfügung gestellt. Zur Bestimmung dieses Wertes kann entweder eine Statistik über fiktive, optimal wiedergegebene Augäpfel gemacht werden, oder die Augäpfel gut wiedergegebener Bilder werden, eingescannt und deren Farbdichtewerte gemittelt abgelegt. Es ist aber auch möglich, das Verfahren selbstlernend auszubilden, wobei eine vermeintlich optimale Wiedergabe-Farbdichte gewählt wird, diese überprüft und ggf. korrigiert wird. Dieses Verfahren wird fortgesetzt, bis sich ein optimaler Eindruck des Augapfels einstellt. Der somit ermittelte Wert wird bis auf weiteres als Wiedergabe-Farbdichtewert behalten. Es hat sich gezeigt, dass es vorteilhaft ist als Wiedergabe-Farbdichtewert für den Augapfel einen im Wesentlichen weißen, unter Umständen leicht rötlich gefärbten Eindruck durch geeignete Wahl von Farbdichtewerten entstehen zu lassen.

Die aus den Augäpfeln gewonnenen Farbdichte-Korrekturwerte können nun auf das gesamte wiederzugebende Bild angewandt werden. Da diese Korrekturwerte aus einer im Wesentlichen weißen Bildinformation gewonnen wurden, ist dabei davon auszugehen, dass inbesondere weiße Bildmotive bei dieser Korrektur in der Wiedergabe richtig erscheinen. Eine weitere vorteilhafte Vorgehensweise besteht darin, die aus den Augäpfeln gewonnenen Farbdichte-Korrekturwerte mit den aus anderen bekannten Verfahren zur Bestimmung von Farbdichte-Korrekturwerten wie z.B. den für Grauwerte oder Hauttöne ermittelten Korrekturwerten zu verrechnen, um im Bild einen Kompromiss zu erzielen, der an Farbwerten im Mittel alle möglichen Motive so gut wie möglich wiedergibt. Bei diesem Vorgehen können die durch unterschiedliche Verfahren gewonnenen Farbdichte-Korrekturwerte beispielsweise mit Wichtungsfaktoren versehen addiert werden, so dass sich ein Gesamt-Farbdichte-Korrekturwert für jede Farbe ergibt.

Ein weiteres vorteilhaftes Verfahren, welches etwas aufwändiger ist, dafür aber einen optimaleren Einsatz der für das jeweilige Bild angebrachtesten Farbdichte-Korrekturwerte ermöglicht, besteht darin, die aus verschiedenen Verfahren ermittelten Farbdichte-Korrekturwerte in Abhängigkeit vom Bildmotiv einzusetzen. So ist es vorteilhaft bei Bildern, welche sehr viele weiße Flächen beinhalten, den aus den Augäpfeln gewonnenen Farbdichte-Korrekturwert stärker zu wichten als die anderen Farbdichte-Korrekturwerte. Bei Bildern, die sehr viele Hautflächen aufweisen, könnte hingegen vorteilhafter Weise der aus Hauttönen gewonnene Farbdichte-Korrekturwert vorrangig berücksichtigt werden. Hier lassen sich beliebige Kombinationen verschiedener Farbdichte-Korrekturwerte ableiten.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: ein Flussdiagramm einer vorteilhaften Ausführungsform der Erfindung
- Fig. 2: eine schematische Darstellung eines Auges

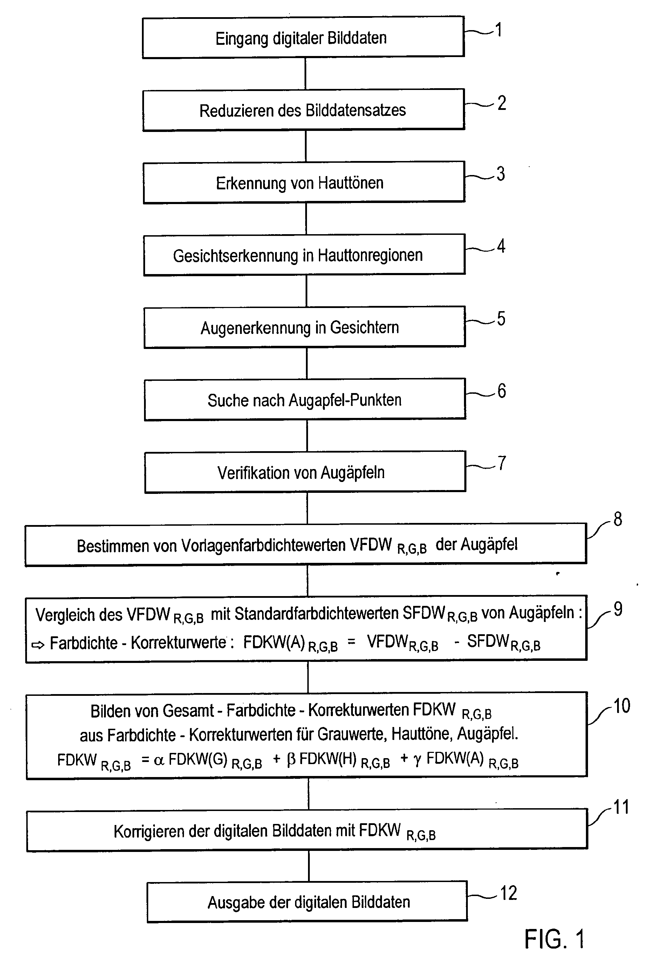

Fig. 1 zeigt schematisch den Ablauf eines erfindungsgemäßen Verfahrens, das zum Ziel hat, Farben und Helligkeiten bei der Wiedergabe von digitalen Bilddaten so zu gestalten, dass der erzielte Bildeindruck dem Realitätsempfinden des Betrachters möglichst nahe kommt. In einem Schritt 1 gehen die digitalen Bilddaten ein. Dabei kann es sich um Fotos, Computergrafiken, eingescannte Bilder oder Ähnliches handeln. Die Eingabe der Daten erfolgt von einem Scanner, einer CD oder über Internet bzw. über irgendeinen anderen digitalen Dateninput. In einem Schritt 2 kann der Bilddatensatz reduziert werden, um Bearbeitungszeit und Speicher zu sparen, da das erfindungsgemäße Verfahren auch auf einem nieder aufgelösten Datensatz durchführbar ist. Dieser Schritt 2 ist jedoch optional. Es ist ebenso möglich, den hoch aufgelösten Datensatz zur Berechnung der Dichte und Farb-Korrekturwerte heranzuziehen, da dies genauer ist. In einem Bearbeitungsschritt 3 werden die Bilddaten auf Hauttonpunkte hin untersucht. Das Mischungsverhältnis, in dem die Farbdichten von Rot, Grün und Blau bei Hauttönen vorliegen, ist als Erfahrungswert bekannt und kann zur Identifikation von Hautbereichen verwendet werden. Es ist vorteilhaft, die erkannten, einzelnen Pixel mit Hauttönen zu Gebieten zusammenzufassen. Dies erfolgt beispielsweise dadurch, dass in der Umgebung von als hauttonfarbig erkannten Punkten nach weiteren Punkten gesucht wird, deren Farbdichten weniger als ein bestimmter Schwellwert von den Farbdichten von Hauttonfarben abweichen. Unter den so ermittelten Hauttongebieten wird in einem Schritt 4 nach darunter befindlichen Gesichtern gesucht. Für diese Gesichtserkennung gibt es verschiedene, bekannte Verfahren. Einige dieser Verfahren arbeiten mit verformbaren Gittern, deren Gitterpunkte aus gesichtsmarkanten Punkten bestehen. Des Weiteren gibt es Gesichtserkennungsverfahren, bei denen Gesichtstemplates über die Hautregionen gelegt werden und verglichen wird inwieweit eine Übereinstummung von Template und Hautregion vorliegt. Ein Beispiel hierfür ist das in IS & T/SID Eighth Color Imaging Conference, S. 140-143, veröffentlichte Verfahren: "Face Detection from Color Negative Film Using Flexible Template". Ferner existieren Verfahren, welche Gesichter anhand von geometrischen Überlegungen identifizieren. Prinzipiell können hier alle bekannten Gesichtserkennungsverfahren verwendet werden. Für das erfindungsgemäße Verfahren ist es auch nicht unbedingt notwendig erst nach Hauttönen und nur innerhalb der Hauttöne nach Gesichtern zu suchen. Ebensogut wäre möglich in jedem gesamten Bild Gesichter zu suchen. Dies wäre lediglich Rechenzeit aufwändiger und würde mehr Rechenkapazität erforderlich machen. Sobald in einem Bild Gesichter erkannt wurden, wird in einem Schritt 5 innerhalb der Gesichter nach Augen gesucht. Die Augenerkennung kann über Proportionsüberlegungen, Templates oder Farbüberlegungen erfolgen. Ein Beispiel ist in der US 6,151,403 offenbart. Auch hier können prinzipiell alle Augenerkennungsverfahren eingesetzt werden. Wiederum Rechenzeit aufwändiger aber prinzipiell möglich ist es, die Gesichtserkennung aus Schritt 4 zu übergeben und von vorneherein gleich Augen innerhalb des Bilddatensatzes zu suchen.

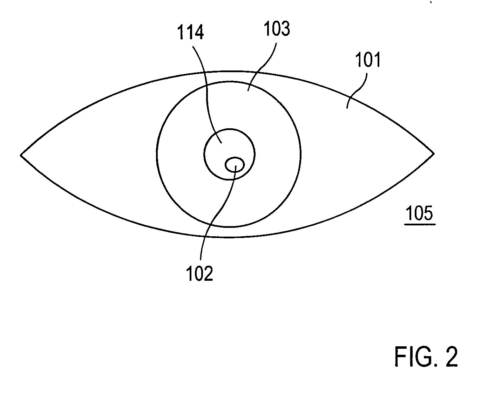

Nachdem nun bekannt ist, in welchem Bereich des Bildes sich die Augen befinden, werden die für die Erfindung wesentlichen Augäpfel ermittelt. Zur Erläuterung ist in Figur 2 ein Auge schematisch dargestellt.

In einem Schritt 6 wird dazu ein Bereich um die lokalisierten Augenpositionen definiert, in dem dann zusammenhängende Gebiete einer bestimmten Größe gesucht werden, die eine sehr geringe Farbsättigung aufweisen. Gesucht wird dabei nach der geringsten Farbdifferenz bezogen auf alle Farben, indem bespielsweise die Minima von R-B, R-G bzw. B-G gesucht werden. Sobald die Minima dieser Differenzen ermittelt wurden, wird ein Schwellwert definiert, der in nicht zu großem Abstand vom Minimum liegt. Anschließend werden Punkte in der Umgebung der Minimapunkte gesucht, die unterhalb der Schwelle liegen. Auf diese Art und Weise wird ein geometrisches Gebilde minimaler Dichte ermittelt. In einem Schritt 7 wird nun verifiziert, dass diese Bereiche minimaler Dichte tatsächlich Bildpunkte von Augäpfeln 101 darstellen, da es sich dabei ebensogut um aufgenommene Lichtreflexe 102 handeln könnte. Diese Verifikation erfolgt vorteilhafter Weise anhand geometrischen Plausibilätsüberlegungen. So sind Lichtreflexe 102 im Allgemeinen sehr schmal und langgezogen und sehr klein, wohingegen Augäpfel 101 im Allgemeinen ein größeres, kompakteres Gebiet umfassen. Genausogut kann zur Verifikation der Augäpfelbereiche 101 untersucht werden, ob die Umgebung der Gebiete minimaler Dichte mit der Umgebung von Augäpfeln 101 übereinstimmt. So muss an dieses helle Gebiet beispielsweise eine kreisförmige, dunkle Iris 103 mit Pupille 103 angrenzen bzw. am anderen Rand des Augapfelgebietes (101) hauttonfarbene Bereiche 105 eingrenzen. Eine weitere Möglichkeit zur Verifikation von Augäpfeln 101 besteht darin, die einzelnen Farben zu untersuchen, da bei Sättigung wenigstens einer Farbe im Allgemeinen ein Lichtreflex 102 und kein Augapfel 101 vorliegt. Sobald nun ein Bereich alles zu einem Augapfel 101 zugehörig verifiziert wurde, wird in einem Schritt 8 die integrale Farbigkeit und Helligkeit der Augapfelpunkte 101 dieses Bereichs bestimmt. Diese Bestimmung kann beispielsweise über Mittelwertbildung erfolgen. Damit ist bekannt, welche Farbdichtewerte die Augäpfel 101 in der wiederzugebenden Bildvorlage haben. In einem Schritt 9 werden diese so ermittelten Farbdichtewerte der Vorlage mit Standardfarbdichtewerten von Augäpfeln 101 verglichen. Die zum Vergleich herangezogenen Standardfarbdichtewerte von Augäpfeln 101 sind vorbestimmt und in einem Speicher für diese Bildverarbeitung abgelegt. Sie können beispielsweise aus einem optimal wiedergebenen Augapfel 101 ermittelt werden, es ist aber auch möglich, sie als Mittelwert aus vielen Augäpfeln 101 von realistisch wiedergegebenen Bildern abzuleiten. Genausogut kann als Standardfarbdichtewert ein Wert gegeben werden, der in einer Modellstudie als schön empfundener Wert ermittelt wurde. Hier sind beliebige, weitere Vorgehensweisen vorstellbar.

Durch den Vergleich von Vorlagenfarbdichtewert und Standardfarbdichtewert ermittelt man in der Differenz schließlich den Farbdichte-Korrekturwert für jede der Farben Rot, Grün und Blau. Vorteilhafter Weise wird dieser Farbdichte-Korrekturwert in jeder Farbe mit den für optimale Grauwerte und zur Wiedergabe optimaler Hauttöne ermittelten Farbdichte-Korrekturwerten sowie aus eventuellen anderen Verfahren abgeleiteten Farbdichte-Korrekturwerten in einem Schritt 10 zusammengeführt. Diese Addition unterschiedlicher Farbdichte-Korrekturwerte zu einem Gesamt-Farbdichte-Korrekturwert kann vorteilhafter Weise gewichtet erfolgen. Je nachdem, welcher Bildinhalt als wichtiger angesehen wird, können dabei unterschiedliche Gewichtsfaktoren verwendet werden. Die Wahl der Gewichtsfaktoren kann einmalig für alle Bilder anhand von Erfahrungswerten vorgenommen werden, sie kann aber auch motivabhängig für jedes Bild erfolgen. Eine motivabhängige Wahl der Gewichtsfaktoren α, β, γ kann sich beispielsweise daran orientieren, wieviel Hauttöne im Bild enthalten sind oder ob es sich um Personen oder Landschaftsaufnahmen handelt oder wieviel weiße Flächen im Bild vorkommen. Hier stehen dem Fachmann verschiedenste Möglichkeiten offen. In einem Schritt 11 werden schließlich die digitalen Bilddaten mit den Gesamt-Farbdichte-Korrekturwerten korrigiert, so dass sich für die Wiedergabe optimale Farben und Dichten ergeben. In einem Schritt 12 werden diese korrigierten Bilddaten schließlich ausgegeben.

Dieses erfindungsgemäße Verfahren ist für alle digitalen Bilddaten vorteilhaft anzuwenden. Dabei ist es unerheblich, aus welcher Quelle die Daten kommen, bzw. auf welchem Ausgabemedium die Bilder wiedergegeben werden sollen. Als Wiedergabemedien sind hier beispielsweise lichtempfindliche Papiere vorstellbar, welche z.B. mit Laserstrahlen beschrieben werden, wie das im fotografischen Laborbereich gängig ist. Ebensogut kann das Ausgabemedium aber herkömmliches Papier sein, welches mit Tinte bedruckt wird. Weiter sind als Ausgabemedien aber auch Projektionen oder Bildschirmanzeigen vorstellbar. Wichtig ist nur, dass die Bilddaten so zu bearbeiten sind, dass sie dem Betrachter des wiedergegebenen Bildes als mit seinem Farbempfinden übereinstimmend erscheinen.

## Patentansprüche

1. Verfahren zur automatischen Bestimmung von Farbdichte-Korrekturwerten für die Wiedergabe von digitalen Bilddaten, wobei Vorlagen-Farbdichtewerte der digitalen Bilddaten zumindest bereichsweise ermittelt und mit entsprechenden, bekannten Wiedergabe-Farbdichtewerten verglichen werden, **dadurch gekennzeichnet, dass** Augäpfel (101) in den Bilddaten identifiziert und daraus Vorlagen-Farbdichtewerte gewählt werden.

2. Verfahren nach Anspruch 1, **dadurch gekennzeichnet, dass** Augenpositionen zu Identifikation der Augäpfeln (101) im Rahmen von Gesichtserkennungsverfahren bestimmt werden.

3. Verfahren nach Anspruch 1, **dadurch gekennzeichnet, dass** Augenpositionen zur Identifikation der Augäpfeln (101) im Rahmen von "rote-Augen-Erkennungsverfahren" bestimmt werden.

4. Verfahren nach Anspruch 2 oder 3, **dadurch gekennzeichnet, dass** zur Identifikation der Augäpfel (101) Gebiete annähernd weißer Farbe im Wiedergabedatensatz im Bereich der Augenpositionen lokalisiert werden.

5. Verfahren nach einem der vorhergehenden Ansprüche, **dadurch gekennzeichnet, dass** zur Verifikation der identifizierten Augäpfel (101) deren Umgebung betrachtet wird.

6. Verfahren nach einem der vorhergehenden Ansprüche, **dadurch gekennzeichnet, dass** zur Verifikation der identifizierten Augäpfel (101) deren Farbsättigung untersucht wird.

7. Verfahren nach einem der vorhergehenden Ansprüche, **dadurch gekennzeichnet, dass** zur Verifikation der identifizierten Augäpfel (101) deren geometrische Ausdehung herangezogen wird.

8. Verfahren nach Anspruch 1, **dadurch gekennzeichnet, dass** ein Gebiet aller zu einem Augapfel (101) gehörigen Punkte gebildet wird.

9. Verfahren nach Anspruch 8, **dadurch gekennzeichnet, dass** zur Bestimmung der Vorlagen-Farbdichtewerte eines Augapfels (101) über alle Punkte innerhalb des Gebietes gemittelt wird.

10. Verfahren nach Anspruch 1, **dadurch gekennzeichnet, dass** Wiedergabe-Farbdichtewerte anhand einer Statistik über die Farbdichtewerte einer großen Anzahl von Beispielsaugäpfeln ermittelt werden.

11. Verfahren nach Anspruch 1, **dadurch gekennzeichnet, dass** die anhand von Augäpfeln (101) gewonnenen Farbdichte-Korrekturwerte zusätzlich zu von Hauttönen abgeleiteten Farbdichte-Korrekturwerten berücksichtigt werden.
